(19) Europäisches Patentamt
European Patent Office
Office européen des brevets

(11) EP 2 594 920 B1

## (12) EUROPEAN PATENT SPECIFICATION

(45) Date of publication and mention
of the grant of the patent:
**01.06.2016 Bulletin 2016/22**

(51) Int Cl.:
**G01N 21/55** (2006.01)  **G01N 21/3586** (2014.01)
**A61K 9/20** (2006.01)

(21) Application number: **12192842.8**

(22) Date of filing: **15.11.2012**

(54) **DEVICE, METHOD AND PROGRAM LUBRICANT SPREAD ANALYSIS**

VORRICHTUNG, VERFAHREN UND PROGRAMM ZUR AUSBREITUNGSANALYSE VON SCHMIERMITTELN

DISPOSITIF, PROCÉDÉ ET PROGRAMME POUR L'ANALYSE D'ÉTALEMENT DE LUBRIFIANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2011 JP 2011251803**

(43) Date of publication of application:
**22.05.2013 Bulletin 2013/21**

(73) Proprietor: **Advantest Corporation**
**Tokyo 179-0071 (JP)**

(72) Inventors:
• **Kato, Eiji**
**Nerima-ku, Tokyo 179-0071 (JP)**
• **Irisawa, Akiyoshi**
**Nerima-ku, Tokyo 179-0071 (JP)**

(74) Representative: **Gill Jennings & Every LLP**
**The Broadgate Tower**
**20 Primrose Street**
**London EC2A 2ES (GB)**

(56) References cited:
**JP-A- 2008 298 460**    **US-A- 5 548 393**
**US-A1- 2010 245 096**

• **CHAN ET AL: "Spectroscopic Imaging of Compacted Pharmaceutical Tablets", CHEMICAL ENGINEERING RESEARCH AND DESIGN, PART A, INSTITUTION OF CHEMICAL ENGINEERS, XX, vol. 83, no. 11, 1 November 2005 (2005-11-01), pages 1303-1310, XP022536852, ISSN: 0263-8762, DOI: 10.1205/CHERD.05088**
• **BERNARD VAN EERDENBRUGH ET AL: "Application of mid-IR spectroscopy for the characterization of pharmaceutical systems", INTERNATIONAL JOURNAL OF PHARMACEUTICS, ELSEVIER BV, NL, vol. 417, no. 1, 9 December 2010 (2010-12-09), pages 3-16, XP028281368, ISSN: 0378-5173, DOI: 10.1016/J.IJPHARM.2010.12.011 [retrieved on 2010-12-15]**
• **VINCENT MAZEL ET AL: "Original predictive approach to the compressibility of pharmaceutical powder mixtures based on the Kawakita equation", INTERNATIONAL JOURNAL OF PHARMACEUTICS, ELSEVIER BV, NL, vol. 410, no. 1, 13 March 2011 (2011-03-13), pages 92-98, XP028200724, ISSN: 0378-5173, DOI: 10.1016/J.IJPHARM.2011.03.027 [retrieved on 2011-03-21]**

EP 2 594 920 B1

## Description

BACKGROUND ART

1. Technical Field of The Invention

The present invention relates to analysis of a spread state of a lubricant in a tablet.

2. Related Art

A lubricant is generally mixed with medicine particles in order to prevent a tablet making failure such as sticking in a tablet making process in a manufacturing process of a medicine. Magnesium stearate is a representative lubricant, and has an effect of increasing fluidity of the medical particles. Proper mixture of the lubricant alleviates friction between a die and a punch of a tableting machine and the tablet.

However, if the mixture of the lubricant is improper (namely, a mixing time is too long), the lubricant is spread extremely during the mixture, and a state in which the entire medical particles is covered by a thin film is brought about. Many of lubricants have a hydrophobic property, which has an adverse effect on hardness, collapsibility, and leachability of the tablet. The mixing time of the lubricant can be considered as an important process parameter relating to a medicine quality.

Moreover, Quality by Design (QbD) which sufficiently designs the medicine quality on the research and development state, and makes the medicine according to the design is proposed in a guideline of the International Conference on Harmonization (ICH) of Japan, the United States, and the EU, and quality assurance based on scientific evidence is thus required. The PAT (Process Analytical Technology) which is a technology for monitoring the CQA (Critical Quality Attribute) of the medicine in real time, and controlling the ongoing process has become important as a technology applied thereto.

A spread degree of the lubricant, which is considered as one of the CQAs is evaluated by analysis such as observation by electron microscope, the contact angle, and the discharge force. However, these analysis methods are destructive tests, are hardly real-time, and are difficult to use as a PAT tool.

An Academic Publication 1 discusses the use of an *in situ* ATR device to form Fourier Transform Infrared (FTIR) images, from which information on the density distribution of major components in the tablet were derived.

Then, a Patent Document 1 (refer to ABSTRACT) proposes evaluation of the spread state of the lubricant by measuring a sum of absorbances in wavelength ranges including an absorbed wavelength characteristic to a lubricant component.

(Prior Art Documents)

(Patent Document 1) Japanese Laid-Open Patent Publication (Kokai) No. 2010-8404
(Patent Document 2) Japanese Laid-Open Patent Publication (Kokai) No. 2008-298460
(Patent Document 3) Japanese Laid-Open Patent Publication (Kokai) No. 2008-77799
(Patent Document 4) Japanese Laid-Open Patent Publication (Kokai) No. 2006-3285
(Patent Document 5) International Patent Publication No. WO2006/083001 (Academic Publication 1)
Spectroscopic Imaging Of Compacted Pharmaceutical Tablets, CHEMICAL ENGINEERING RESEARCH AND DESIGN, PART A, Vol. 83, Nr. 11, pages 1303 - 1310, Chan et al., 2005.

SUMMARY OF THE INVENTION

However, the sum of the absorbances measured by the technology described in the Patent Document 1 is not information which directly reflects the spread of the lubricant attached to the medicine particles. It is thus difficult to precisely measure the spread of the lubricant.

In view of the foregoing problems, an object of the present invention is to correctly measure the spreading state of the lubricant.

According to the present invention, a device for analyzing a spreading state of a lubricant is defined according to appended independent claim 1.

According to the thus constructed device for analyzing a spread state of a lubricant, a device for analyzing a spread state of a lubricant in a device under test in which particles constructing a tablet and the lubricant are mixed with each other, can be provided. An electromagnetic wave output device outputs an electromagnetic wave having a frequency equal to or higher than 20 GHz and equal to or lower than 500 THz. An optical element has a total reflection surface for totally reflecting the electromagnetic wave, and causes the device under test to receive an evanescent wave generated from the total reflection surface. An electromagnetic wave detector detects the electromagnetic wave totally reflected by the total reflection surface. A spectrum deriving unit derives a reflectance of the electromagnetic wave on the total reflection surface or a value based on the reflectance based on a detection result by the electromagnetic wave detector while the reflectance or the value based on the reflectance is associated with the frequency of the electromagnetic wave and a manufacturing condition of the particle or the device under test. A characteristic extraction unit extracts a characteristic based on the manufacturing condition from a derived result by the spectrum deriving unit.

According to the spread analysis device for a lubricant of the present invention, the manufacturing conditions is a mixing time during which the particles and the lubricant are mixed with each other.

According to the spread analysis device for a lubricant of the present invention, the manufacturing condition may include a rotation speed of a mixing device for carrying out the mixing.

According to the spread analysis device for a lubricant of the present invention, the characteristic based on the manufacturing is in predetermined frequency range; and an absorbance of the electromagnetic wave in the predetermined frequency range by the particle changes compared with an absorbance of the electromagnetic wave in a frequency range other than the predetermined frequency range by the particle.

According to the spread analysis device for a lubricant of the present invention, the characteristic based on the manufacturing condition may be a principal component acquired by applying the principal component analysis to the derived result by the spectrum deriving unit.

According to the spread analysis device for a lubricant of the present invention, the manufacturing conditions is a mixing time during which the particles and the lubricant are mixed with each other; the characteristic based on the manufacturing condition is in a predetermined frequency range; and an absorbance of the electromagnetic wave in the predetermined frequency range by the particle changes compared with an absorbance of the electromagnetic wave in a frequency range other than the predetermined frequency range by the particle, and the spread analysis device includes a spread determination unit that determines the spread state of the lubricant based on a change in the extraction result by the characteristic extraction unit with respect to a passage of the mixing time.

According to the spread analysis device for a lubricant of the present invention, the value based on the reflectance may be an nth-order derivative of the reflectance with respect to a value based on the frequency of the electromagnetic wave, or an nth-order derivative of the absorption rate of the electromagnetic wave on the total reflection surface with respect to a value based on the frequency of the electromagnetic wave where n is an integer equal to or more than 1.

According to the spread analysis device for a lubricant of the present invention, a plurality of device under tests may be acquired from a mixture in which the particles and the lubricant are mixed with each other; and the value based on the reflectance may be any one of a standard deviation of the reflectances for the plurality of device under tests, a standard deviation of the absorption rate of the electromagnetic wave on the total reflection surface for the plurality of device under tests, a standard deviation of nth-order derivatives of the reflectance with respect to the value based on the frequency of the electromagnetic wave, and the standard deviation of nth-order derivatives of the absorption rate of the electromagnetic wave with respect to a value based on the frequency of the electromagnetic wave, where n is an integer equal to or more than 1.

According to the spread analysis device for a lubricant of the present invention, the particle may be an excipient.

According to the spread analysis device for a lubricant of the present invention, an absorbance of the electromagnetic wave in the predetermined frequency range by the particle may be higher than an absorbance of the electromagnetic wave in a frequency range other than the predetermined frequency range by the particle.

According to the spread analysis device for a lubricant of the present invention, the optical element may include: an incident surface that receives the electromagnetic wave from the electromagnetic wave output device, and an emission surface that emits the electromagnetic wave totally reflected by the total reflection surface into the air; the refractive index of the optical element may be higher than the refractive index of the air; the total reflection may occur inside the optical element; and the device under test may be disposed outside the optical element, and is in contact with the total reflection surface.

According to the spread analysis device for a lubricant of the present invention, the device under test may be pressed against the total reflection surface.

According to the present invention, the spread analysis device for a lubricant may include: a device-under-test acquisition unit that acquires the device under test from a mixture in which the particles and the lubricant are mixed with each other; a device-under-test arrangement unit that arranges the device under test on the total reflection surface; and a device-under-test discharge unit that discharges the device under test, for which the electromagnetic wave is detected, from the total reflection surface.

According to the spread analysis device for a lubricant of the present invention, the mixture of the particles and the lubricant may be stopped based on a determination result of the spread state by the spread determination unit.

The present invention also includes a method for analyzing a spread state of a lubricant using a device for analyzing a spread state of a lubricant.

The present invention also includes a program of instructions for execution by a computer to perform a process for analyzing a spread state of a

BRIEF DESCRIPTION OF THE DRAWINGS

FIG. 1 is a diagram showing a configuration of a spread analysis device for lubricant 1 according to the embodiments of the present invention;

FIG. 2 is a functional block diagram showing a configuration of the spread determination device 20 according to the embodiments of the present invention;

FIG. 3 shows ATR spectra of lactose (excipient) and magnesium stearate (lubricant);

FIG. 4 is a schematic diagram of the reflectance of the terahertz waves on the total reflection surface 14a for each of mixing times;

FIG. 5 is a conceptual diagram of the extraction result by the characteristic spectrum extraction unit 20g according to the first embodiment;

FIG. 6 shows the second order derivative of the reflectance of the terahertz waves on the total reflection surface 14a with respect to the frequency of the terahertz waves for each of the mixing times according to the second embodiment;

FIG. 7 is a conceptual diagram of the extraction result by the characteristic spectrum extraction unit 20g according to the second embodiment; and

FIG. 8 shows an extent of the second order derivative of the reflectance of the terahertz waves on the total reflection surface 14a with respect to the frequency of the terahertz waves for each the device under tests 2 in the predetermined frequency range for each of the mixing times according to the third embodiment.

PREFERRED EMBODIMENTS

A description will now be given of embodiments of the present invention referring to drawings.

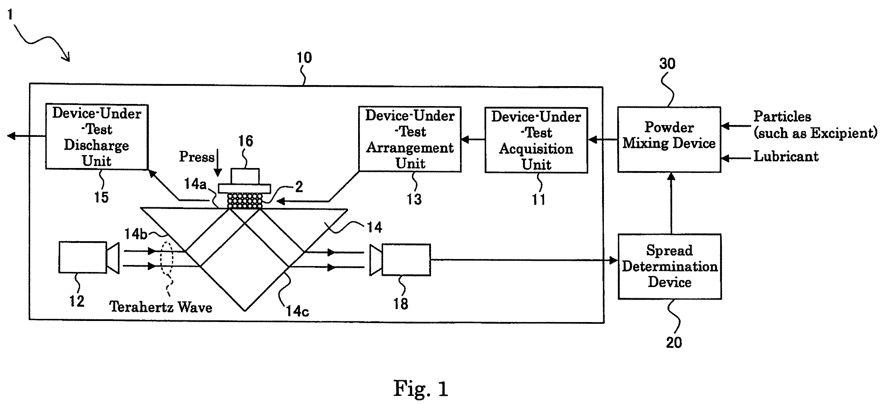

FIG. 1 is a diagram showing a configuration of a spread analysis device for lubricant 1 according to the embodiments of the present invention. The spread analysis device for lubricant 1 includes an electromagnetic wave detection device 10, a spread determination device 20, and a powder mixing device 30.

The powder mixing device 30 is a device for mixing particles and a lubricant. The particles construct a tablet, and are of an excipient (such as lactose), for example. The lactose is often used as the excipient for medicines. The lubricant is magnesium stearate, for example. The powder mixed by the powder mixing device 30 is tableted into tablets. The powder mixing device 30 stores a mixture of the particles (excipient) and the lubricant. The mixing is carried out for a certain period (such as 30 minutes or 60 minutes). A period for mixing the particles (excipient) and the lubricant is referred to as mixing time. It is assumed that the mixture contains the excipient much more in weight ratio than the lubricant. For example, it is assumed that the mixture contains 98% of the lactose and 2% of the lubricant in terms of the weight ratio. It should be noted that the mixture may contain a principal agent and additives.

The electromagnetic wave detection device 10 includes a device-under-test acquisition unit 11, a device-under-test arrangement unit 13, a device-under-test discharge unit 15, an electromagnetic wave output device 12, an optical element 14, a pressurizer 16, and an electromagnetic wave detector 18.

The device-under-test acquisition unit 11 acquires a device under test 2 from the mixture of the particles (excipient) and the lubricant stored in the powder mixing device 30. The device under test 2 is a part of the mixture, and is a mixture of the particles and the lubricant. The spread analysis device for lubricant 1 is a device for determining a spread state of the lubricant in the device under test 2.

It should be noted that the acquisition of the device under test 2 may not be carried out by the device-under-test acquisition unit 11, but may be carried out manually. Moreover, a multiple pieces (such as ten pieces) of the device under test 2 may be acquired from the mixture. The acquisition of the device under test 2 is carried out for each of predetermined mixing times (such as 0 minute, 5 minutes, 10 minutes, 15 minutes, and 30 minutes).

Though a tablet tableted from the mixture may be used as the device under test 2, the mixture in the powder state is preferably directly used as the device under test 2.

The device-under-test arrangement unit 13 arranges the device under test 2 acquired by the device-under-test acquisition unit 11 on a total reflection surface 14a. It should be noted that the arrangement of the device under test 2 on the total reflection surface 14a may be carried out manually.

The device-under-test discharge unit 15 discharges the device under test 2, which has undergone detection of magnetic wave (terahertz wave) by the electromagnetic wave detector 18, from the total reflection surface 14a. The discharge of the device under test 2 may be carried out manually.

The electromagnetic wave output device 12 outputs electromagnetic waves having a frequency equal to or higher than 20 GHz and equal to or lower than 500 THz. The frequency of the electromagnetic wave output by the electromagnetic wave output device 12 is preferably in the terahertz range from 0.02 THz to 12 THz appropriate for measuring a change in surface state of the device under test 2 as a change in absorption of the device under test 2. Then, according to these embodiments, a description is given while assuming that the electromagnetic waves output by the electromagnetic wave output device 12 are terahertz waves.

The optical element 14 is an ATR prism, for example. It should be noted that the ATR stands for Attenuated Total Reflection. The optical element 14 includes the total reflection surface 14a, an incident surface 14b, and an emission surface 14c.

The incident surface 14b receives the terahertz waves from the electromagnetic wave output device 12. The refractive index of the optical element 14 is higher than the refractive index of the ambient air of the optical element 14, and the terahertz waves are refracted toward the total reflection surface 14a.

The total reflection surface 14a totally reflects the terahertz waves which have passed through the incident surface 14b. In other words, the total reflection occurs inside the optical element 14. It should be noted that if the electromagnetic waves (terahertz waves) transmitting in the optical element 14 are made incident to the total reflection surface 14a at an angle equal to or more than the critical angle, the electromagnetic waves are totally reflected inside the optical element 14.

It should be noted that the device under test 2 is arranged outside the optical element 14, and is in contact with the total reflection surface 14a. As a result, evanescent waves generated from the total reflection surface 14a are received by the device under test 2. Moreover, the refractive index of the optical element 14 is preferably larger than the refractive index of the device under test 2.

The evanescent waves penetrate a rear surface (outside the optical element 14) of an area of the total reflection surface 14a in which the electromagnetic waves (terahertz waves) are totally reflected in the optical element 14. The penetration depth Dp of the evanescent waves can be represented by the following equation using the wavelength $\lambda$ of the electromagnetic wave, the refractive index $n_1$ of the optical element 14, the refractive index $n_2$ of the device under test 2, and the incident angle $\theta$ to the total reflection surface 14a in the optical element 14.

$$Dp = \frac{\lambda/n_1}{2\pi\sqrt{\sin^2\theta - (n_2/n_1)}}$$

If the device under test 2 is arranged in the area which the evanescent waves penetrate, spectrum information on the characteristic absorption of the device under test 2 is acquired.

According to the ATR spectroscopy, information on the device under test 2 in an area on the order of a wavelength corresponding to the penetration length of the evanescent waves or less is acquired, and a slight change in the surface of the device under test 2 can be sensed at high sensitivity.

The emission surface 14c is a surface emitting the terahertz waves totally reflected by the total reflection surface 14a to the air.

The pressurizer 16 presses the device under test 2 against the total reflection surface 14. As a result, the device under test 2 is close in contact with the total reflection surface 14.

The electromagnetic wave detector 18 detects an intensity of the terahertz waves totally reflected by the total reflection surface 14a.

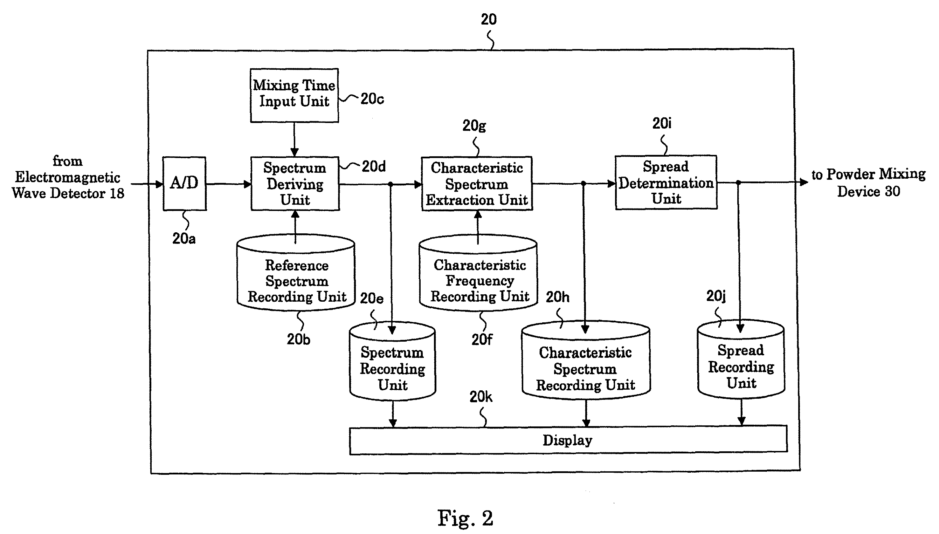

FIG. 2 is a functional block diagram showing a configuration of the spread determination device 20 according to the embodiments of the present invention.

The spread determination device 20 includes an AD converter 20a, a reference spectrum recording unit 20b, a mixing time input unit 20c, a spectrum deriving unit 20d, a spectrum recording unit 20e, a characteristic frequency recording unit 20f, a characteristic spectrum extraction unit 20g, a characteristic spectrum recording unit 20h, a spread determination unit 20i, a spread recording unit 20j, and a display 20k.

The AD converter 20a converts the intensity (which is an analog signal) of the terahertz waves detected by the electromagnetic wave detector 18 into a digital signal, and outputs the digital signal.

The reference spectrum recording unit 20b records a total return loss spectrum (reflectance on the total reflection surface 14a associated with the frequency of the electromagnetic waves output by the electromagnetic wave output device 12) measured when the device under test 2 is not arranged on the optical element 14 as a reference spectrum.

A total return loss spectrum in which measurement fluctuation of the system including fluctuation of the electromagnetic waves emitted by the electromagnetic wave output device 12 is restrained can be acquired by using the reference spectrum.

The mixing time input unit 20c serves to input the mixing times (such as 0 minute, 5 minutes, and 10 minutes) at which the device under test 2 is acquired to the spectrum deriving unit 20d. For example, the input may be carried out manually.

The spectrum deriving unit 20d of the spread determination device 20 varies depending on respective embodiments described later.

First Embodiment

The spectrum deriving unit 20d receives the detection result by the electromagnetic wave detector 18 via the AD converter 20a. The spectrum deriving unit 20d derives a reflectance (or a value based on the reflectance) of the terahertz waves on the total reflection surface 14a based on the detection result by the electromagnetic wave detector 18 while the reflectance is associated with the frequency of the terahertz waves and the mixing time. It should be noted that when multiple device under tests 2 are acquired, an average of the reflection indices measured for the respective device under tests 2 is considered as the result derived by the spectrum deriving unit 20d.

Moreover, the reflectance on the total reflection surface 14a is represented by (intensity of terahertz waves detected by electromagnetic wave detector 18)/(intensity of terahertz waves output by electromagnetic wave output device 12) in principle. A total return loss spectrum in which the measurement fluctuation of the system including the fluctuation of the electromagnetic waves emitted by the electromagnetic wave output device 12 is restrained can be acquired by calibrating the reflectance based on the recorded content of the reference spectrum recording unit 20b.

It should be noted that the value based on the reflectance is an absorption rate of the terahertz waves on the total reflection surface 14a ("100%-reflectance" or "-log$_{10}$(reflectance)"), for example.

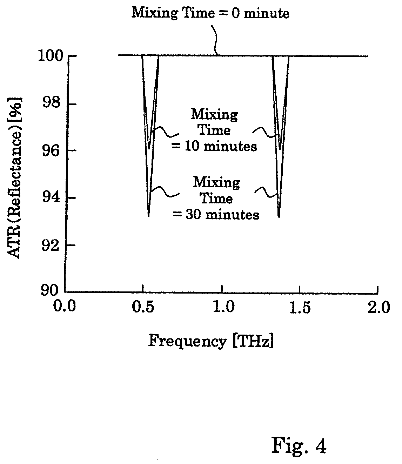

The spectrum recording unit 20e records the derived result (spectrum) by the spectrum deriving unit 20d. Refer to FIG. 4 for an example of a recorded content of the spectrum recording unit 20e.

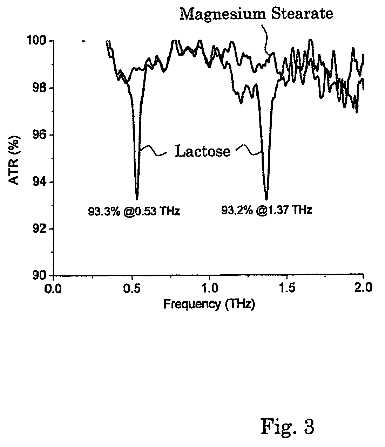

FIG. 3 shows ATR spectra of lactose (excipient) and magnesium stearate (lubricant). Referring to FIG. 3, as a result of measurement of the reflectance (ATR(%)) of the terahertz waves approximately from 0.3 THz to 2 THz on the total reflection surface 14a, it is appreciated that, regarding lactose, characteristic absorptions appear in the measurement frequency range (approximately 93% at 0.53 THz and 1.37 THz), and, regarding magnesium stearate, characteristic absorptions do not appear.

It is known that the intensity of the evanescent waves penetrating the total reflection surface 14a is highest on the total reflection surface 14a, and exponentially decreases as a distance from the total reflection surface 14a increases. Moreover, it is known that the penetration length increases as the refractive index of the device under test 2 arranged on the total reflection surface 14a increases.

Thus, a distribution of air layers decreases, and a distribution of lactose increases in a shallow portion close to the surface of the device under test 2 (portion to which the evanescent waves reach) as a result of the spread of the lubricant in the device under test 2 acquired from the mixture which has been mixed for a sufficient mixing time. Thus, the evanescent waves tend to be absorbed by the lactose in the neighborhoods of 0.53 THz and 1.37 THz. The reflectance of the terahertz waves on the total reflection surface 14a is thus low.

In other words, the spread of the lubricant brings about a state in which the individual lactose particles are filmed, the fluidity of the particles increases, the lactose particles are smoothly in close contact with each other immediately above the total reflection surface 14a, and the distribution of the air layers decreases. Moreover, the smooth close contact of the lactose particles on which the lubricant is spread increases a ratio that lactose exists in an area in which the evanescent waves are strong, thereby increasing the average of the absorption rate. Further, the air layers are replaced by the thin films of the lubricant and the layers of the lactose, and the penetration length of the evanescent waves thus increases, thereby further increasing the absorption.

On the other hand, the lubricant is not sufficiently spread, and a distribution of air layers is high in the shallow portion close to the surface of the device under test 2 (portion to which the evanescent waves reach) in the device under test 2 acquired from the mixture which has been mixed for an insufficient mixing time. The terahertz waves thus tend to be reflected in the neighborhoods of 0.53 THz and 1.37 THz. The reflectance of the terahertz waves on the total reflection surface 14a is thus high.

FIG. 4 is a schematic diagram of the reflectance of the terahertz waves on the total reflection surface 14a for each of mixing times. It should be noted that FIG. 4 is a conceptual diagram, and the shown reflectance takes rough values, and only presents an approximate tendency thereof.

If the mixing time is 0 minute, many air layers are distributed in the shallow portion of the surface of the device under test 2, and the terahertz waves are totally reflected (reflectance: 100%).

If the mixing time is 10 minutes, a relatively large quantity of lactose is distributed in the shallow portion of the surface of the device under test 2, and the evanescent waves tend to be absorbed in the neighborhoods of 0.53 THz and 1.37 THz. The reflectance of the terahertz waves thus tends to decrease in the neighborhoods of 0.53 THz and 1.37 THz. The air layers are also distributed in the shallow portion of the surface of the device under test 2, and the reflectance does not decrease to 93%.

If the mixing time is 30 minutes, a large quantity of lactose is distributed in the shallow portion of the surface of the device under test 2, and the evanescent waves tend to be absorbed in the neighborhoods of 0.53 THz and 1.37 THz. The reflectance of the terahertz waves thus tends to decrease in the neighborhoods of 0.53 THz and 1.37 THz. The air layers are hardly distributed in the shallow portion of the surface of the device under test 2, and the reflectance decreases to 93%.

The characteristic frequency recording unit 20f records the predetermined frequency range. It should be noted that the absorption rate of the terahertz waves by the particles (excipient: lactose) in the predetermined frequency ranges changes (increases, for example) compared with the absorption rate of the terahertz waves by the particles in frequency ranges other than the predetermined frequency ranges.

If the lactose is used as the particles, the predetermined frequency ranges are either one or both of the neighborhoods of 0.53 THz and 1.37 THz referring to FIG. 3. On this occasion, the neighborhood of 0.53 THz is considered as the predetermined frequency range.

The characteristic spectrum extraction unit 20g extracts the portion of the predetermined frequency range from the derived result by the spectrum deriving unit 20d. It should be noted that the characteristic spectrum extraction unit 20g reads the predetermined frequency range from the characteristic frequency recording unit 20f. The characteristic spectrum recording unit 20h records the extraction result by the characteristic spectrum extraction unit 20g.

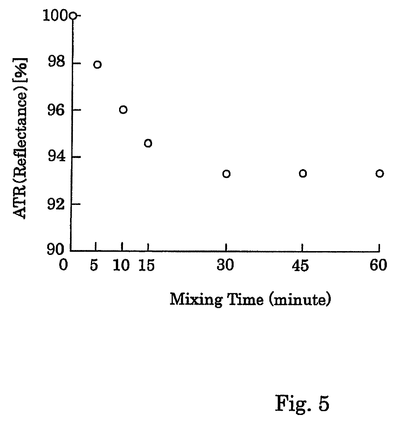

FIG. 5 is a conceptual diagram of the extraction result by the characteristic spectrum extraction unit 20g according to the first embodiment. It should be noted that FIG. 5 is a conceptual diagram, the shown reflectances takes rough values, and only present an approximate tendency thereof.

If the mixing time is 0 minute, though the reflectance of the terahertz waves in the neighborhood of 0.53 THz is 100%, as the mixing time extends to 5 minutes, 10 minutes, and 15 minutes, the reflectance decreases, and becomes constant at 93% after 30 minutes.

The spread determination unit 20i determines the spread state of the lubricant based on a change in the extraction result by the characteristic spectrum extraction unit 20g with respect to the elapse of the mixing time.

According to the first embodiment, if the extraction result by the characteristic spectrum extraction unit 20g presents a constant value or a fluctuation within a predetermined range with respect to the elapse of the mixing time, it is determined that the lubricant is sufficiently spread. According to the example in FIG. 5, it is determined that the lubricant is sufficiently spread at the time point of the mixing time of 30 minutes. If the mixing time is less than 30 minutes, it is determined that the lubricant is not sufficiently spread.

If the determination result for the spread state by the spread determination unit 20i is that the lubricant is sufficiently spread, the spread determination unit 20i controls the powder mixing device 30 so as to stop the mixture of the particles and the lubricant.

The spread recording unit 20j records the determination result by the spread determination unit 20i. The recorded content by the spread recording unit 20j may be "stop mixing" if the determination is that the lubricant is sufficiently spread, and may be "continue mixing" if the determination is that the lubricant is not sufficiently spread.

The display 20k displays the recorded contents of the spectrum recording unit 20e, the characteristic spectrum recording unit 20h, and the spread recording unit 20j.

A description will now be given of an operation of the spread analysis device for lubricant 1 according to the first embodiment.

First, the device-under-test acquisition unit 11 acquires a plurality of the device under tests 2 from the mixture stored in the powder mixing device 30 at each of predetermined mixing times (such as 0 minute, 5 minutes, 10 minutes, 15 minutes, and 30 minutes).

The acquired device under tests 2 are arranged on the total reflection surface 14a by the device-under-test arrangement unit 13 one by one. The device under test 2 arranged on the total reflection surface 14a is pressed against the total reflection surface 14a by the pressurizer 16.

The terahertz waves output from the electromagnetic wave output device 12 are made incident from the incident surface 14b into the optical element (ATR prism) 14, transmit through the optical element 14, and travel to the total reflection surface 14a. Though the terahertz waves are totally reflected by the total reflection surface 14a, the evanescent waves penetrate the total reflection surface 14a on this occasion. The shallow portion of the surface of the device under test 2 receives the evanescent waves.

The lactose (excipient) in the shallow portion of the surface of the device under test 2 absorbs the components at the frequencies of 0.53 THz and 1.37 THz, and the air reflects the terahertz waves.

The terahertz waves totally reflected by the total reflection surface 14a are emitted from the emission surface 14c into the air, and the intensity thereof is detected by the electromagnetic wave detector 18.

The detected intensity is converted by the AD converter 20a into the digital signal, and is fed to the spectrum deriving unit 20d. When the detection of the intensity of the terahertz waves is finished, the device under test 2 is discharged by the device-under-test discharge unit 15 from the total reflection surface 14a. Then, the process of arranging the next device under test 2 on the total reflection surface 14a, pressing the device under test 2 against the total reflection surface 14a, and discharging the device under test 2 from the total reflection surface 14a is repeated for all the device under tests 2.

The spectrum deriving unit 20d derives the reflectance on the total reflection surface 14a associated with the frequency of the terahertz waves based on the intensity detected by the electromagnetic wave detector 18 (refer to FIG. 4).

Moreover, the spectrum deriving unit 20d acquires the mixing time from the mixing time input unit 20c. As a result, the reflectance on the total reflection surface 14a can be associated with the mixing time (refer to FIG. 4).

Further, the spectrum deriving unit 20d acquires the reflectance on the total reflection surface 14a from the reference spectrum recording unit 20b when the device under test 2 is not arranged on the optical element 14. As a result, the reflectance on the total reflection surface 14a can be calibrated.

It should be noted that the spectrum deriving unit 20d outputs the average of the reflection indices on the total reflection surface 14c measured for the respective device under tests 2 as the derived result by the spectrum deriving unit 20d.

The derived result (refer to FIG. 4) by the spectrum deriving unit 20d is recorded in the spectrum recording unit 20e, and is fed to the characteristic spectrum extraction unit 20g. The characteristic spectrum extraction unit 20g extracts the portion of the predetermined frequency range (such as the neighborhood of 0.53 THz) (refer to FIG. 5) from the derived result by the spectrum deriving unit 20d (refer to FIG. 4). It should be noted that the characteristic spectrum extraction unit 20g reads the predetermined frequency range from the characteristic frequency recording unit 20f. The characteristic spectrum recording unit 20h records the extraction result by the characteristic spectrum extraction unit 20g.

The spread determination unit 20i determines the spread state of the lubricant based on a change in the extraction result by the characteristic spectrum extraction unit 20g with respect to the elapse of the mixing time. For example, referring to FIG. 5, it is determined that the lubricant is sufficiently spread at the time point of the mixing time of 30 minutes where the reflectance is constant at 93%. The spread recording unit 20j records the determination result by the spread determination unit 20i.

The display 20k displays the recorded contents of the spectrum recording unit 20e, the characteristic spectrum recording unit 20h, and the spread recording unit 20j.

Moreover, if the determination result for the spread state by the spread determination unit 20i is that the lubricant is sufficiently spread, the spread determination unit 20i controls the powder mixing device 30 so as to stop the mixture of the particles and the lubricant.

Moreover, the determination by the spread determination unit 20i may by calibrated according to data acquired by measuring the device under test 2 by means of a destructive test (such as a tablet hardness test, a bulk density test, a discharge force test, and a contact angle test).

The spread analysis device for lubricant 1 according to the first embodiment extracts the reflectance (ATR spectrum) on the total reflection surface 14a in the predetermined frequency range (range in which the absorption rate of the lactose is high (such as the neighborhood of 0.53 THz)) changing according to the spread state of the lubricant of the device under test 2 by the characteristic spectrum extraction unit 20g, and can precisely measure the spread sate of the lubricant.

Second Embodiment

The spread analysis device for lubricant 1 according to the second embodiment is different from that of the first embodiment in that the spectrum deriving unit 20d derives a second order derivative of the reflectance (or absorption rate) on the total reflection surface 14a with respect to the frequency of the terahertz waves.

The electromagnetic wave detection device 10 and the powder mixing device 30 in the spread analysis device for lubricant 1 according to the second embodiment are the same as those described above, and a description thereof is therefore omitted.

The AD converter 20a, the reference spectrum recording unit 20b, and the mixing time input unit 20c in the spread determination device 20 of the spread analysis device for lubricant 1 according to the second embodiment are the same as those described above, and a description thereof is therefore omitted.

The spectrum deriving unit 20d receives the detection result by the electromagnetic wave detector 18 via the AD converter 20a. The spectrum deriving unit 20d derives the value based on the reflectance of the terahertz waves on the total reflection surface 14a based on the detection result by the electromagnetic wave detector 18 while the value based on the reflectance is associated with the frequency of the terahertz waves and the mixing time. It should be noted that when a plurality of the device under tests 2 are acquired, an average of the values based on the reflectance measured for the respective device under tests 2 is considered as the result derived by the spectrum deriving unit 20d.

It should be noted that the value based on the reflectance is the second order derivative of the reflectance with respect to the frequency of the terahertz waves, or the second order derivative of the absorption rate with respect to the frequency of the terahertz waves.

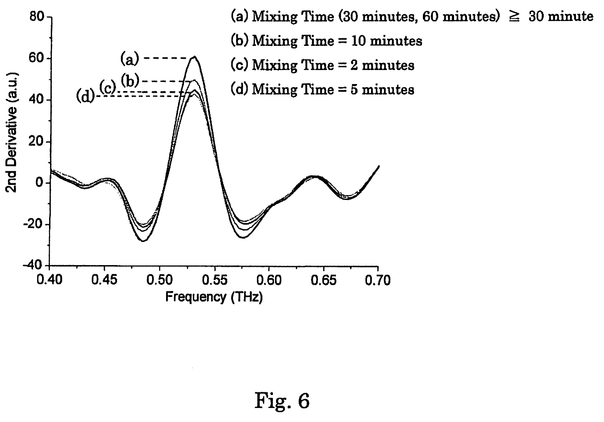

FIG. 6 shows the second order derivative of the reflectance of the terahertz waves on the total reflection surface 14a with respect to the frequency of the terahertz waves for each of the mixing times according to the second embodiment. A line (a) in FIG. 6 represents an extreme value of the second order derivative (mixing time is 30 minutes or 60 minutes), a line (b) in FIG. 6 is an extreme value of the second order derivative (mixing time is 10 minutes), a line (c) in FIG. 6 is an extreme value of the second order derivative (mixing time is 2 minutes), and a line (d) in FIG. 6 is an extreme value of the second order derivative (mixing time is 5 minutes). It should be noted that there is almost no difference between the second-order derivatives in the neighborhood of 0.53 THz for 30 minutes of the mixing time and that for 60 minutes of the mixing time.

Referring to FIG. 6, as the mixing time increases to 5 minutes and 10 minutes, the second-order derivative increases, and reaches an approximately constant value after 30 minutes in the neighborhood (predetermined frequency range) of the absorption frequency (0.53 THz) characteristic to the lactose. It should be noted that a positive value of the second-order derivative implies a upward concavity (valley) in the chart illustrating the reflectance while the reflectance is assigned to the vertical axis and the frequency is assigned to the horizontal axis. A positive value and an increase of the second order derivative means that the portion of the upward concavity (valley) in the chart illustrating the reflectance becomes deeper (the absorption by the lactose increases).

The spectrum recording unit 20e records the derived result (spectrum) by the spectrum deriving unit 20d. Refer to FIG. 6 for an example of a recorded content of the spectrum recording unit 20e.

The characteristic frequency recording unit 20f is the same as that of the first embodiment, and records the predetermined frequency range (such as the neighborhood of 0.53 THz).

The characteristic spectrum extraction unit 20g extracts the portion of the predetermined frequency range from the derived result by the spectrum deriving unit 20d. It should be noted that the characteristic spectrum extraction unit 20g reads the predetermined frequency range from the characteristic frequency recording unit 20f. The characteristic spectrum recording unit 20h records the extraction result by the characteristic spectrum extraction unit 20g.

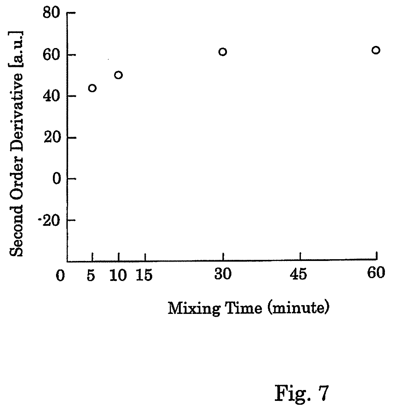

FIG. 7 is a conceptual diagram of the extraction result by the characteristic spectrum extraction unit 20g according to the second embodiment. It should be noted that FIG. 7 is a conceptual diagram, the shown second order derivative takes rough values, and only presents an approximate tendency thereof.

As the mixing time extends to 5 minutes and 10 minutes, the second order derivative increases, and the second order derivative becomes constant at approximately 60 after 30 minutes.

The spread determination unit 20i determines the spread state of the lubricant based on a change in the extraction result by the characteristic spectrum extraction unit 20g with respect to the elapse of the mixing time.

According to the second embodiment, if the extraction result by the characteristic spectrum extraction unit 20 presents a constant value or a fluctuation within a predetermined range with respect to the elapse of the mixing time, it is determined that the lubricant is sufficiently spread. According to the example in FIG. 7, it is determined that the lubricant is sufficiently spread at the time point of the mixing time of 30 minutes. If the mixing time is less than 30 minutes, it is determined that the lubricant is not sufficiently spread.

The spread recording unit 20j and the display 20k are the same as those in the first embodiment, and a description thereof, therefore, is omitted.

An operation of the spread analysis device for lubricant 1 according to the second embodiment is the same as the operation of the first embodiment, and hence a description thereof is omitted. It should be noted that the derived result by the spectrum deriving unit 20d is the second order derivative of the reflectance (or absorption rate) with respect to the frequency of the terahertz waves (refer to FIG. 6), and refer to FIG. 7 for the extraction result by the characteristic spectrum extraction unit 20g.

The spread analysis device for lubricant 1 according to the second embodiment provides the same effects as in the first embodiment. Though there is the description "second order derivative" according to the second embodiment, a first order derivative may be used, and the derivative may be an nth-order derivative (n is an integer equal to or more than 1). Moreover, though there is the description of the second order derivative and the like with respect to the frequency of the terahertz waves, a second order derivative with respect to the wavelength or the wavenumber of the terahertz waves may be used. In other words, a first or higher order of derivative with respect to the frequency of the terahertz waves may be carried out.

Third Embodiment

The spread analysis device for lubricant 1 according to a third embodiment is different from that of the first embodiment in that the spectrum deriving unit 20d derives a standard deviation of any one of (1) the reflectance on the total reflection surface 14a, (2) the absorption rate on the total reflection surface 14a, and (3) the second order derivative of the reflectance or the absorption rate on the total reflection surface 14a with respect to the frequency of the terahertz waves. Though there is the description "second order derivative" according to the third embodiment, a first order derivative may be used, and the derivative may be an nth-order derivative (n is an integer equal to or more than 1). Moreover, though there is the description of the second order derivative and the like with respect to the frequency of the terahertz waves, a second order derivative with respect to the wavelength or the wavenumber of the terahertz waves may be used. In other words, a first or higher order of derivative with respect to the frequency of the terahertz waves may be carried out.

The electromagnetic wave detection device 10 and the powder mixing device 30 in the spread analysis device for lubricant 1 according to the third embodiment are the same as those described above, and a description thereof is therefore omitted.

The AD converter 20a, the reference spectrum recording unit 20b, and the mixing time input unit 20c in the spread determination device 20 of the spread analysis device for lubricant 1 according to the third embodiment are the same as those described above, and a description thereof is therefore omitted.

The spectrum deriving unit 20d receives the detection result by the electromagnetic wave detector 18 via the AD converter 20a. The spectrum deriving unit 20d derives the value based on the reflectance of the terahertz waves on the total reflection surface 14a based on the detection result by the electromagnetic wave detector 18 while the value based on the reflectance is associated with the frequency of the terahertz waves and the mixing time.

It should be noted that a plurality of the device under tests 2 are acquired. Moreover, the value based on the reflectance is the standard deviation of any one of (1) the reflectance on the total reflection surface 14a, (2) the absorption rate on the total reflection surface 14a, and (3) the second order derivative of the reflectance or the absorption rate on the total reflection surface 14a with respect to the frequency of the terahertz waves measured for each of the device under tests 2.

The spectrum recording unit 20e records the derived result (spectrum) by the spectrum deriving unit 20d.

The characteristic frequency recording unit 20f is the same as that of the first embodiment, and records the predetermined frequency range (such as the neighborhood of 0.53 THz).

The characteristic spectrum extraction unit 20g extracts the portion of the predetermined frequency range from the derived result by the spectrum deriving unit 20d. It should be noted that the characteristic spectrum extraction unit 20g reads the predetermined frequency range from the characteristic frequency recording unit 20f. The characteristic spectrum recording unit 20h records the extraction result by the characteristic spectrum extraction unit 20g.

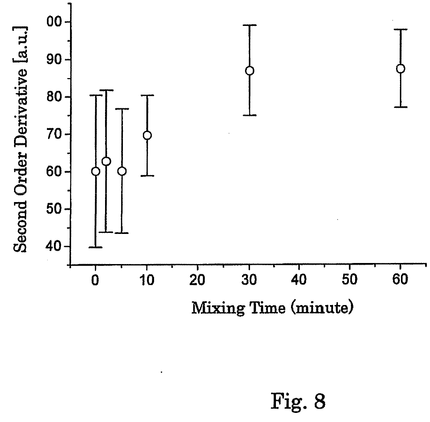

FIG. 8 shows an extent of the second order derivative of the reflectance of the terahertz waves on the total reflection surface 14a with respect to the frequency of the terahertz waves for each the device under tests 2 in the predetermined frequency range for each of the mixing times according to the third embodiment. It should be noted that a circle is marked at the center of the range of the second order derivative in FIG. 8. Moreover, the predetermined frequency range is the neighborhood of 0.53 THz.

As the mixing time extends to 0 minute, 2 minutes, 5 minutes, and 10 minutes, the range of the second order derivative narrows, and the range of the second order derivative is approximately constant after 30 minutes. This implies that (1) a variation of the attached state of the lubricant to the surface of the lactose particles is large, and the range of the second order derivative is thus wide if the mixing time is short, and (2) the lubricant sufficiently spreads, the variation of the attached state of the lubricant to the surface of the lactose particles is small, and the range of the second order derivative is thus narrow if the mixing time is long. The magnitude of the variation is acquired as the magnitude of the standard deviation of the second order derivative. The standard deviation of the second order derivative is small and approximately constant after the 30 minutes of the mixing time.

The spread determination unit 20i determines the spread state of the lubricant based on a change in the extraction result by the characteristic spectrum extraction unit 20g with respect to the elapse of the mixing time.

According to the third embodiment, if the extraction result by the characteristic spectrum extraction unit 20g presents a constant value or a fluctuation within a predetermined range with respect to the elapse of the mixing time, it is determined that the lubricant is sufficiently spread. According to the example in FIG. 8, it is determined that the lubricant is sufficiently spread at the time point of the mixing time of 30 minutes. If the mixing time is less than 30 minutes, it is determined that the lubricant is not sufficiently spread.

The spread recording unit 20j and the display 20k are the same as those in the first embodiment, and a description thereof, therefore, is omitted.

An operation of the spread analysis device for lubricant 1 according to the third embodiment is the same as the operation of the first embodiment, and hence a description thereof is omitted. However, the derived result by the spectrum deriving unit 20d is the standard deviation of the reflectance (or absorption rate) or the standard deviation of the second order derivative of the reflectance (or absorption rate) with respect to the frequency of the terahertz waves.

The spread analysis device for lubricant 1 according to the third embodiment provides the same effects as in the first embodiment.

There is the description that the mixing time input unit 20c inputs the mixing time. However, the mixing time input unit 20c may input the rotation speed (number of rotations per time of a container for mixing the particles and the lubricant) of the powder mixing device 30. The mixing time input unit 20c may input the mixing time and the rotation speed of the powder mixing device 30. In other words, production conditions of the particles and the device under test may be input.

Moreover, principal components may be acquired by applying the principal component analysis to the derived result by the spectrum deriving unit 20d in place of the characteristic spectrum extraction unit 20g.

Moreover, the above-described embodiments may be realized in the following manner. A computer is provided with a CPU, a hard disk, and a media (such as a floppy disk (registered trade mark) and a CD-ROM) reader, and the media reader is caused to read a medium recording a program realizing the above-described respective components such as the spread determination device 20, thereby installing the program on the hard disk. This method may also realize the above-described functions.

**Claims**

1. A device for analyzing a spreading state of a lubricant (1) in a mixture of particles and lubricant to be tested (2) defining the components used in the fabrication of a tablet or the tablet itself, comprising:

    an electromagnetic wave output device (12) that outputs an electromagnetic wave having a frequency equal to or higher than 20 GHz and equal to or lower than 500 THz;
    an optical element (14) that has a total reflection surface, on which the mixture of particles and lubricant to be tested is arranged, for totally reflecting the electromagnetic wave, and causing the mixture of particles and lubricant to be tested (2) to receive an evanescent wave generated on the total reflection surface;
    an electromagnetic wave detector (18) that detects the electromagnetic wave totally reflected by the total reflection surface;
    a spectrum deriving unit (20d) that derives either a reflectance spectrum of the electromagnetic wave on the total reflection surface (14a) or a value based on the reflectance spectrum, based on a detection result provided by the electromagnetic wave detector whereby the reflectance or the value based on the reflectance is dependent upon the frequency of the electromagnetic wave and a manufacturing condition of the mixture of particles and lubricant to be tested (2); and
    a characteristic extraction unit (20g) that extracts from the spectrum derived by the spectrum deriving unit, in a pre-determined frequency range, the reflectance of the electromagnetic wave on the total reflection surface (14a) or a value based on said reflectance, as an extraction result, which is dependent upon the manufacturing condition,

wherein:

the manufacturing condition is a mixing time during which the particles and the lubricant are mixed with each other; and

the absorbance of the electromagnetic wave in the predetermined frequency range is changed by the particles compared with the absorbance of the electromagnetic wave in a frequency range other than the predetermined frequency range, the spread analysis device further comprising,

a spreading determination unit (20i) that determines the spreading state of the lubricant based on the change in the extraction result extracted by the characteristic extraction unit with respect to a passage of the mixing time.

2. The spread analysis device for a lubricant according to claim 1, the characteristic determined by the manufacturing condition is a principal component acquired by applying the principal component analysis to the derived result by the spectrum deriving unit.

3. The spread analysis device for a lubricant according to claim 1, wherein the value based on the reflectance is an absorbance of the electromagnetic wave by the total reflection surface.

4. The spread analysis device for a lubricant according to claim 1, the value based on the reflectance is an nth-order derivative of the reflectance with respect to a value based on the frequency of the electromagnetic wave, or an nth-order derivative of the absorbance of the electromagnetic wave on the total reflection surface with respect to a value based on the frequency of the electromagnetic wave where n is an integer equal to or more than 1.

5. The spread analysis device for a lubricant according to claim 1, wherein:

a plurality of mixtures of particles and lubricant to be tested (2) are acquired from a mixture in which the particles and the lubricant are mixed with each other; and
the value based on the reflectance is any one of a standard deviation of the reflectances for the plurality of mixtures of particles and lubricant to be tested (2), a standard deviation of the absorbance of the electromagnetic wave on the total reflection surface for the plurality of mixtures of particles and lubricant to be tested, a standard deviation of nth-order derivatives of the reflectance with respect to the value based on the frequency of the electromagnetic wave, and the standard deviation of nth-order derivatives of the absorbance of the electromagnetic wave with respect to a value based on the frequency of the electromagnetic wave, where n is an integer equal to or more than 1.

6. The spread analysis device for a lubricant according to claim 1, wherein the particle is an excipient.

7. The spread analysis device for a lubricant according to claim 1, wherein an absorbance of the electromagnetic wave in the predetermined frequency range by the particle is higher than an absorbance of the electromagnetic wave in a frequency range other than the predetermined frequency range by the particle.

8. The spread analysis device for a lubricant according to claim 1, wherein:

the optical element (14) includes:

an incident surface (14b) that receives the electromagnetic wave from the electromagnetic wave output device, and
an emission surface (14c) that emits the electromagnetic wave totally reflected by the total reflection surface into the air;
the refractive index of the optical element (14) is higher than the refractive index of the air;
the total reflection occurs inside the optical element (14); and the mixture of particles and lubricant to be tested (2) is disposed outside the optical element (14), and is in contact with the total reflection surface (14a).

9. The spread analysis device for a lubricant according to claim 8, the mixture of particles and lubricant to be tested (2) is pressed against the total reflection surface (14a).

10. The spread analysis device for a lubricant according to claim 1, comprising: a mixture of particles and lubricant to be tested (2) acquisition unit (11) that acquires the mixture of particles and lubricant to be tested (2) from a mixture in which the particles and the lubricant are mixed with each other;

a mixture of particles and lubricant to be tested (2) arrangement unit (13) that arranges the mixture of particle and lubricant to be tested (2) on the total reflection surface (14a); and

a mixture of particles and lubricant to be tested (2) discharge unit (15) that discharges the mixture of particles and lubricant to be tested (2), for which the electromagnetic wave is detected, from the total reflection surface (14a).

11. The spread analysis device for a lubricant according to claim 1, wherein the mixture of the particles and the lubricant is stopped based on a determination result of the spread state by the spread determination unit.

12. A method for analyzing a spreading state of a lubricant using a device for analyzing a spread state of a lubricant (1) in a mixture of particles and lubricant to be tested (2) defining the components used in the fabrication of a tablet or the tablet itself, including an electromagnetic wave output device (12) that outputs an electromagnetic wave having a frequency equal to or higher than 20 GHz and equal to or lower than 500 THz; an optical element (14) that has a total reflection surface (14a), on which the mixture of particles and lubricant to be tested is arranged, for totally reflecting the electromagnetic wave and causing the mixture of particles and lubricant to be tested (2) to receive an evanescent wave generated on the total reflection surface (14a); and an electromagnetic wave detector (18) that detects the electromagnetic wave totally reflected by the total reflection surface (14a);

said method comprising:

a spectrum deriving step that derives either a reflectance spectrum of the electromagnetic wave on the total reflection surface (14a) or a value based on the reflectance spectrum, based on a detection result provided by the electromagnetic wave detector (18) whereby the reflectance or the value based on the reflectance is dependent upon the frequency of the electromagnetic wave and a manufacturing condition of the mixture of particles and lubricant to be tested (2); and

a characteristic extraction step that extracts from the spectrum derived in the spectrum deriving step, in a pre-determined frequency range, the reflectance of the electromagnetic wave on the total reflection surface (14a) or a value based on said reflectance, as an extraction result, which is dependent upon the manufacturing condition,

wherein:

the manufacturing condition is a mixing time during which the particles and the lubricant are mixed with each other;

and

the absorbance of the electromagnetic wave in the predetermined frequency range is changed by the particles compared with the absorbance of the electromagnetic wave in a frequency range other than the predetermined frequency range,

said method further comprising,

a spreading determination step that determines the spreading state of the lubricant based on the change in the extraction result extracted by the characteristic extraction step with respect to a passage of the mixing time.

13. A program of instructions for execution by a computer to perform a process for analyzing a spreading state of a lubricant using a device for analyzing a spreading state of a lubricant (1) in a mixture of particles and lubricant to be tested (2) defining the components used in the fabrication of a tablet or the tablet itself, including an electromagnetic wave output device (12) that outputs an electromagnetic wave having a frequency equal to or higher than 20 GHz and equal to or lower than 500 THz; an optical element (14) that has a total reflection surface (14a), on which the mixture of particles and lubricant to be tested is arranged, for totally reflecting the electromagnetic wave and causing the mixture of particles and lubricant to be tested (2) to receive an evanescent wave generated on the total reflection surface (14a); and an electromagnetic wave detector (18) that detects the electromagnetic wave totally reflected by the total reflection surface (14a);

said process comprising:

a spectrum deriving step that derives either a reflectance spectrum of the electromagnetic wave on the total reflection surface (14a) or a value based on the reflectance spectrum, based on a detection result provided by the electromagnetic wave detector (18) whereby the reflectance or the value based on the reflectance is dependent upon the frequency of the electromagnetic wave and a manufacturing condition of the mixture of particles and lubricant to be tested (2); and

a characteristic extraction step that extracts from the spectrum derived in the spectrum deriving step, in a pre-determined frequency range, the reflectance of the electromagnetic wave on the total reflection surface (14a) or a value based on said reflectance, as an extraction result, which is dependent upon the manufacturing condition,

wherein:

the manufacturing condition is a mixing time during which the particles and the lubricant are mixed with each other; and

the absorbance of the electromagnetic wave in the predetermined frequency range is changed by the particles compared with the absorbance of the electromagnetic wave in a frequency range other than the predetermined frequency range,

said process further comprising,

a spreading determination step that determines the spreading state of the lubricant based on the change in the extraction result extracted by the characteristic extraction step with respect to a passage of the mixing time.

## Patentansprüche

1. Eine Vorrichtung zum Analysieren eines Ausbreitungszustands eines Schmiermittels (1) in einem zu prüfenden Teilchen-Schmiermittel-Gemisch (2), die die bei der Fertigung einer Tablette verwendeten Komponenten oder die Tablette selbst definiert, wobei die Vorrichtung Folgendes beinhaltet:

eine elektromagnetische Wellenausgabevorrichtung (12), die eine elektromagnetische Welle mit einer Frequenz gleich oder höher als 20 GHz und gleich oder niedriger als 500 THz ausgibt;
ein optisches Element (14), das eine Totalreflexionsfläche aufweist, auf der das zu prüfende Teilchen-Schmiermittel-Gemisch angeordnet ist, um die elektromagnetische Welle vollständig zu reflektieren und das zu prüfende Teilchen-Schmiermittel-Gemisch (2) dazu zu veranlassen, eine evaneszente Welle, die auf der Totalreflexionsfläche erzeugt worden ist, aufzunehmen;
einen elektromagnetischen Wellendetektor (18), der die elektromagnetische Welle nachweist, die vollständig von der Totalreflexionsfläche reflektiert wird;
eine Spektrumableitungseinheit (20d), die entweder ein Reflexionsgradspektrum der elektromagnetischen Welle auf der Totalreflexionsfläche (14a) oder einen auf dem Reflexionsgradspektrum basierenden Wert ableitet, der auf einem Nachweisergebnis basiert, das von dem elektromagnetischen Wellendetektor bereitgestellt wird, wobei der Reflexionsgrad oder der auf dem Reflexionsgrad basierende Wert von der Frequenz der elektromagnetischen Welle und einer Herstellungsbedingung des zu prüfenden Teilchen-Schmiermittel-Gemischs (2) abhängig ist; und
eine Merkmalsextraktionseinheit (20g), die aus dem Sepktrum, das von der Spektrumableitungseinheit abgeleitet wird, den Reflexionsgrad der elektromagnetischen Welle auf der Totalreflexionsfläche (14a) oder einen auf diesem Reflexionsgrad basierenden Wert in einem vorbestimmten Spektrumsbereich als ein Extraktionsergebnis extrahiert, das von der Herstellungsbedingung abhängig ist, wobei:

die Herstellungsbedingung eine Mischzeit ist, in deren Verlauf die Teilchen und das Schmiermittel miteinander gemischt werden; und
die Absorption der elektromagnetischen Welle in dem vorbestimmten Frequenzbereich durch die Teilchen verändert wird, verglichen mit der Absorption der elektromagnetischen Welle in einem anderen Frequenzbereich als dem vorbestimmten Frequenzbereich,
wobei die Ausbreitungsanalysevorrichtung ferner Folgendes beinhaltet:
eine Ausbreitungsbestimmungseinheit (20i), die den Ausbreitungszustand des Schmiermittels auf der Grundlage der Änderung in dem von der Merkmalsextraktionseinheit extrahierten Extraktionsergebnis mit Bezug auf einen Ablauf der Mischzeit bestimmt.

2. Die Ausbreitungsanalysevorrichtung für ein Schmiermittel gemäß Anspruch 1, wobei das Merkmal, das durch die Herstellungsbedingung bestimmt wird, eine Hauptkomponente ist, die durch Anwendung der Hauptkomponentenanalyse auf das von der Spektrumableitungseinheit abgeleitete Ergebnis erfasst wird.

3. Die Ausbreitungsanalysevorrichtung für ein Schmiermittel gemäß Anspruch 1, wobei der auf dem Reflexionsgrad basierende Wert eine Absorption der elektromagnetischen Welle von der Totalreflexionsfläche ist.

4. Die Ausbreitungsanalysevorrichtung für ein Schmiermittel gemäß Anspruch 1, wobei der auf dem Reflexionsgrad basierende Wert eine Ableitung $n^{ter}$ Ordnung des Reflexionsgrads in Bezug auf einen auf der Frequenz der elektromagnetischen Welle basierenden Wert oder eine Ableitung $n^{ter}$ Ordnung der Absorption der elektromagnetischen Welle auf der Totalreflexionsfläche in Bezug auf einen auf der Frequenz der elektromagnetischen Welle basierenden Wert ist, wobei n eine ganze Zahl ist, die gleich oder mehr als 1 ist.

5.   Die Ausbreitungsanalysevorrichtung für ein Schmiermittel gemäß Anspruch 1, wobei:

    eine Vielzahl von zu prüfenden Teilchen-Schmiermittel-Gemischen (2) aus einem Gemisch erfasst wird, in dem die Teilchen und das Schmiermittel miteinander gemischt sind; und der auf dem Reflexionsgrad basierende Wert einer der Folgenden ist: eine Standardableitung der Reflexionsgrade für die Vielzahl von zu prüfenden Teilchen-Schmiermittel-Gemischen (2), eine Standardableitung der Absorption der elektromagnetischen Welle auf der Totalreflexionsfläche für die Vielzahl von zu prüfenden Teilchen-Schmiermittel-Gemischen, eine Standardableitung von Ableitungen $n^{ter}$ Ordnung des Reflexionsgrads in Bezug auf den auf der Frequenz der elektromagnetischen Welle basierenden Wert, und die Standardableitung von Ableitungen $n^{ter}$ Ordnung der Absorption der elektromagnetischen Welle in Bezug auf den auf der Frequenz der elektromagnetischen Welle basierenden Wert, wobei n eine ganze Zahl ist, die gleich oder mehr als 1 ist.

6.   Die Ausbreitungsanalysevorrichtung für ein Schmiermittel gemäß Anspruch 1, wobei das Teilchen ein Hilfsstoff ist.

7.   Die Ausbreitungsanalysevorrichtung für ein Schmiermittel gemäß Anspruch 1, wobei eine Absorption der elektromagnetischen Welle in dem vorbestimmten Frequenzbereich durch das Teilchen höher ist als eine Absorption der elektromagnetischen Welle in einem anderen Frequenzbereich als dem vorbestimmten Frequenzbereich durch das Teilchen.

8.   Die Ausbreitungsanalysevorrichtung für ein Schmiermittel gemäß Anspruch 1, wobei das optische Element (14) Folgendes einschließt:

    eine Einfallfläche (14b), die die elektromagnetische Welle von der elektromagnetischen Wellenausgabevorrichtung aufnimmt, und eine Abgabefläche (14c), die die vollständig von der Totalreflexionsfläche reflektierte elektromagnetische Welle in die Luft abgibt; der Brechungsindex des optischen Elements (14) höher ist als der Brechungsindex der Luft; die Totalreflexion innerhalb des optischen Elements (14) erfolgt; und das zu prüfende Teilchen-Schmiermittel-Gemisch (2) außerhalb des optischen Elements (14) angeordnet ist und in Kontakt mit der Totalreflexionsfläche (14a) steht.

9.   Die Ausbreitungsanalysevorrichtung für ein Schmiermittel gemäß Anspruch 8, wobei das zu prüfende Teilchen-Schmiermittel-Gemisch (2) gegen die Totalreflexionsfläche (14a) gedrückt wird.

10.  Die Ausbreitungsanalysevorrichtung für ein Schmiermittel gemäß Anspruch 1, die Folgendes beinhaltet:

    eine Erfassungseinheit (11) für das zu prüfende Teilchen-Schmiermittel-Gemisch (2), die das zu prüfende Teilchen-Schmiermittel-Gemisch (2) aus einem Gemisch erfasst, in dem die Teilchen und das Schmiermittel miteinander gemischt sind; eine Anordnungseinheit (13) für das zu prüfende Teilchen-Schmiermittel-Gemisch (2), das das zu prüfende Teilchen-Schmiermittel-Gemisch (2) auf der Totalreflexionsfläche (14a) anordnet; und eine Abräumeinheit (15) für das zu prüfende Teilchen-Schmiermittel-Gemisch (2), die das zu prüfende Teilchen-Schmiermittel-Gemisch (2), für das die elektromagnetische Welle nachgewiesen wird, von der Totalreflexionsfläche (14a) abräumt.

11.  Die Ausbreitungsanalysevorrichtung für ein Schmiermittel gemäß Anspruch 1, wobei das zu prüfende Teilchen-Schmiermittel-Gemisch auf der Grundlage eines Bestimmungsergebnisses des Ausbreitungszustands von der Ausbreitungsbestimmungseinheit gestoppt wird.

12.  Ein Verfahren zum Analysieren eines Ausbreitungszustands eines Schmiermittels unter Verwendung einer Vorrichtung zum Analysieren eines Ausbreitungszustands eines Schmiermittels (1) in einem zu prüfenden Teilchen-Schmiermittel-Gemisch (2), die die bei der Fertigung einer Tablette verwendeten Komponenten oder die Tablette selbst definiert, einschließlich der Folgenden: einer elektromagnetischen Wellenausgabevorrichtung (12), die eine elektromagnetische Welle mit einer Frequenz gleich oder höher als 20 GHz und gleich oder niedriger als 500 THz ausgibt; eines optischen Elements (14), das eine Totalreflexionsfläche (14a) aufweist, auf der das zu prüfende Teilchen-Schmiermittel-Gemisch angeordnet ist, um die elektromagnetische Welle vollständig zu reflektieren und das zu prüfende Teilchen-Schmiermittel-Gemisch (2) dazu zu veranlassen, eine evaneszente Welle, die auf der Totalreflexionsfläche (14a) erzeugt worden ist, aufzunehmen; und eines elektromagnetischen Wellendetektors (18), der die elektromagnetische Welle nachweist, die vollständig von der Totalreflexionsfläche (14a) reflektiert wird;

wobei das Verfahren Folgendes beinhaltet:

einen Spektrumableitungsschritt, der entweder ein Reflexionsgradspektrum der elektromagnetischen Welle auf der Totalreflexionsfläche (14a) oder einen auf dem Reflexionsgradspektrum basierenden Wert ableitet, der auf einem Nachweisergebnis basiert, das von dem elektromagnetischen Wellendetektor (18) bereitgestellt wird, wobei der Reflexionsgrad oder der auf dem Reflexionsgrad basierende Wert von der Frequenz der elektromagnetischen Welle und einer Herstellungsbedingung des zu prüfenden Teilchen-Schmiermittel-Gemischs (2) abhängig ist; und

einen Merkmalsextraktionsschritt, der aus dem Sepktrum, das in dem Spektrumableitungsschritt abgeleitet wird, den Reflexionsgrad der elektromagnetischen Welle auf der Totalreflexionsfläche (14a) oder einen auf diesem Reflexionsgrad basierenden Wert in einem vorbestimmten Spektrumsbereich als ein Extraktionsergebnis extrahiert, das von der Herstellungsbedingung abhängig ist, wobei:

die Herstellungsbedingung eine Mischzeit ist, in deren Verlauf die Teilchen und das Schmiermittel miteinander gemischt werden; und

die Absorption der elektromagnetischen Welle in dem vorbestimmten Frequenzbereich durch die Teilchen verändert wird, verglichen mit der Absorption der elektromagnetischen Welle in einem anderen Frequenzbereich als dem vorbestimmten Frequenzbereich,

wobei das Verfahren ferner Folgendes beinhaltet:

einen Ausbreitungsbestimmungsschritt, der den Ausbreitungszustand des Schmiermittels auf der Grundlage der Änderung in dem durch den Merkmalsextraktionsschritt extrahierten Extraktionsergebnis mit Bezug auf einen Ablauf der Mischzeit bestimmt.

13. Ein Programm von durch einen Computer auszuführenden Instruktionen zum Durchführen eines Prozesses zum Analysieren eines Ausbreitungszustands eines Schmiermittels unter Verwendung einer Vorrichtung zum Analysieren eines Ausbreitungszustands eines Schmiermittels (1) in einem zu prüfenden Teilchen-Schmiermittel-Gemisch (2), die die bei der Fertigung einer Tablette verwendeten Komponenten oder die Tablette selbst definiert, einschließlich der Folgenden: einer elektromagnetischen Wellenausgabevorrichtung (12), die eine elektromagnetische Welle mit einer Frequenz gleich oder höher als 20 GHz und gleich oder niedriger als 500 THz ausgibt; eines optischen Elements (14), das eine Totalreflexionsfläche (14a) aufweist, auf der das zu prüfende Teilchen-Schmiermittel-Gemisch angeordnet ist, um die elektromagnetische Welle vollständig zu reflektieren und das zu prüfende Teilchen-Schmiermittel-Gemisch (2) dazu zu veranlassen, eine evaneszente Welle, die auf der Totalreflexionsfläche (14a) erzeugt worden ist, aufzunehmen; und eines elektromagnetischen Wellendetektors (18), der die elektromagnetische Welle nachweist, die vollständig von der Totalreflexionsfläche (14a) reflektiert wird; wobei der Prozess Folgendes beinhaltet:

einen Spektrumableitungsschritt, der entweder ein Reflexionsgradspektrum der elektromagnetischen Welle auf der Totalreflexionsfläche (14a) oder einen auf dem Reflexionsgradspektrum basierenden Wert ableitet, der auf einem Nachweisergebnis basiert, das von dem elektromagnetischen Wellendetektor (18) bereitgestellt wird, wobei der Reflexionsgrad oder der auf dem Reflexionsgrad basierende Wert von der Frequenz der elektromagnetischen Welle und einer Herstellungsbedingung des zu prüfenden Teilchen-Schmiermittel-Gemischs (2) abhängig ist; und

einen Merkmalsextraktionsschritt, der aus dem Sepktrum, das in dem Spektrumableitungsschritt abgeleitet wird, den Reflexionsgrad der elektromagnetischen Welle auf der Totalreflexionsfläche (14a) oder einen auf diesem Reflexionsgrad basierenden Wert in einem vorbestimmten Spektrumsbereich als ein Extraktionsergebnis extrahiert, das von der Herstellungsbedingung abhängig ist, wobei:

die Herstellungsbedingung eine Mischzeit ist, in deren Verlauf die Teilchen und das Schmiermittel miteinander gemischt werden; und

die Absorption der elektromagnetischen Welle in dem vorbestimmten Frequenzbereich durch die Teilchen verändert wird, verglichen mit der Absorption der elektromagnetischen Welle in einem anderen Frequenzbereich als dem vorbestimmten Frequenzbereich,

wobei der Prozess ferner Folgendes beinhaltet:

einen Ausbreitungsbestimmungsschritt, der den Ausbreitungszustand des Schmiermittels auf der Grundlage der Änderung in dem von der Merkmalsextraktionseinheit extrahierten Extraktionsergebnis mit Bezug auf einen Ablauf der Mischzeit bestimmt.

## Revendications

1. Dispositif d'analyse de l'état d'étalement d'un lubrifiant (1) dans un mélange de particules et du lubrifiant à tester (2) définissant les composants utilisés dans la fabrication d'un comprimé ou du comprimé lui-même, qui comprend :

   un dispositif d'émission d'une onde électromagnétique (12) qui émet une onde électromagnétique dont la fréquence est égale ou supérieure à 20 GHz et égale ou inférieure à 500 THz ;
   un élément optique (14) qui a une surface de réflexion totale sur laquelle le mélange de particules et du lubrifiant à tester est disposé de façon à réfléchir totalement l'onde électromagnétique et à causer une exposition du mélange de particules et du lubrifiant à tester (2) à une onde évanescente générée sur la surface de réflexion totale ;
   un détecteur d'ondes électromagnétiques (18) qui détecte l'onde électromagnétique totalement réfléchie par la surface de réflexion totale ;
   une unité de dérivation du spectre (20d) qui dérive soit un spectre de la réflectance de l'onde électromagnétique sur la surface de réflexion totale (14a), soit une valeur basée sur le spectre de la réflectance reposant sur un résultat de détection fourni par le détecteur d'ondes électromagnétiques, la réflectance ou la valeur basée sur la réflectance dépendant de la fréquence de l'onde électromagnétique et d'une condition de fabrication du mélange de particules et du lubrifiant à tester (2) ; et
   une unité d'extraction de caractéristiques (20g) qui utilise le spectre dérivé par l'unité de dérivation du spectre pour extraire, dans une plage de fréquences prédéterminée, la réflectance de l'onde électromagnétique sur la surface de réflexion totale (14a) ou une valeur basée sur ladite réflectance qui dépend de la condition de fabrication en tant que résultat de l'extraction,

   dans lequel :

   la condition de fabrication est un temps de mélange correspondant à la durée de la période pendant laquelle les particules et le lubrifiant sont mélangés les uns aux autres ;
   l'absorbance de l'onde électromagnétique dans la plage de fréquences prédéterminée est modifiée par les particules par comparaison à l'absorbance de l'onde électromagnétique dans une plage de fréquences autre que la plage de fréquences prédéterminée,

   le dispositif d'analyse de l'étalement comprenant en outre

   une unité de détermination de l'étalement (20i) qui détermine l'état de l'étalement du lubrifiant sur la base du changement du résultat de l'extraction fourni par l'unité d'extraction de caractéristiques par rapport à un passage du temps de mélange.

2. Dispositif d'analyse de l'étalement d'un lubrifiant selon la revendication 1, dans lequel la caractéristique déterminée par la condition de fabrication est un composant principal acquis en appliquant l'analyse de composant principal au résultat dérivé par l'unité de dérivation du spectre.

3. Dispositif d'analyse de l'étalement d'un lubrifiant selon la revendication 1, dans lequel la valeur basée sur la réflectance est une absorbance de l'onde électromagnétique par la surface de réflexion totale.

4. Dispositif d'analyse de l'étalement d'un lubrifiant selon la revendication 1, dans lequel la valeur basée sur la réflectance est une dérivée d'ordre n de la réflectance par rapport à une valeur basée sur la fréquence de l'onde électromagnétique ou une dérivée d'ordre n de l'absorbance de l'onde électromagnétique sur la surface de réflexion totale par rapport à une valeur basée sur la fréquence de l'onde électromagnétique, où n est un nombre entier égal ou supérieur à 1.

5. Dispositif d'analyse de l'étalement d'un lubrifiant selon la revendication 1, dans lequel :

   une pluralité de mélanges de particules et du lubrifiant à tester (2) sont acquis à partir d'un mélange dans lequel les particules et le lubrifiant sont mélangés les uns aux autres ; et
   la valeur basée sur la réflectance correspond à l'une quelconque des suivantes :

   écart type des réflectances obtenues pour la pluralité de mélanges de particules et du lubrifiant à tester (2), écart type des absorbances de l'onde électromagnétique sur la surface de réflexion totale obtenues pour la pluralité de mélanges de particules et du lubrifiant à tester, écart type des dérivées d'ordre n de la réflectance par rapport à la valeur basée sur la fréquence de l'onde électromagnétique et écart type des dérivées d'ordre n de l'absorbance de l'onde électromagnétique par rapport à une valeur basée sur la fréquence de l'onde électromagnétique, n étant un nombre entier égal ou supérieur à 1.

6. Dispositif d'analyse de l'étalement d'un lubrifiant selon la revendication 1, dans lequel la particule est un excipient.

**7.** Dispositif d'analyse de l'étalement d'un lubrifiant selon la revendication 1, dans lequel une absorbance, par la particule, de l'onde électromagnétique dans la plage de fréquences prédéterminée est plus élevée qu'une absorbance, par la particule, de l'onde électromagnétique dans une plage de fréquences autre que la plage de fréquences prédéterminée.

**8.** Dispositif d'analyse de l'étalement d'un lubrifiant selon la revendication 1, dans lequel :

l'élément optique (14) inclut :

une surface incidente (14b) qui reçoit l'onde électromagnétique émise par le dispositif d'émission d'ondes électromagnétiques et une surface d'émission (14c) qui émet l'onde électromagnétique totalement réfléchie dans l'air par la surface de réflexion totale ;

l'indice de réfraction de l'élément optique (14) est plus élevé que l'indice de réfraction de l'air ; la réflexion totale se produit à l'intérieur de l'élément optique (14) ; et le mélange de particules et du lubrifiant à tester (2) est disposé en dehors de l'élément optique (14) et est en contact avec la surface de réflexion totale (14a).

**9.** Dispositif d'analyse de l'étalement d'un lubrifiant selon la revendication 8, dans lequel le mélange de particules et du lubrifiant à tester (2) est poussé contre la surface de réflexion totale (14a).

**10.** Dispositif d'analyse de l'étalement d'un lubrifiant selon la revendication 1, qui comprend :

une unité d'acquisition (11) du mélange de particules et du lubrifiant à tester (2) qui acquiert le mélange de particules et du lubrifiant à tester (2) à partir d'un mélange dans lequel les particules et le lubrifiant sont mélangés les uns aux autres ; une unité d'arrangement (13) du mélange de particules et du lubrifiant à tester (2) qui arrange le mélange de particules et du lubrifiant à tester (2) sur la surface de réflexion totale (14a) ; et une unité de déchargement (15) du mélange de particules et du lubrifiant à tester (2) qui décharge le mélange de particules et du lubrifiant à tester (2) pour lequel l'onde électromagnétique est détectée de la surface de réflexion totale (14a).

**11.** Dispositif d'analyse de l'étalement d'un lubrifiant selon la revendication 1, dans lequel le mélange de particules et du lubrifiant est stoppé sur la base d'un résultat de la détermination de l'état d'étalement par l'unité de détermination de l'étalement.

**12.** Procédé d'analyse d'un état d'étalement d'un lubrifiant au moyen d'un dispositif d'analyse d'un état d'étalement d'un lubrifiant (1) dans un mélange de particules et du lubrifiant à tester (2) définissant les composants utilisés dans la fabrication d'un comprimé ou du comprimé lui-même, qui comprend un dispositif d'émission d'une onde électromagnétique (12) qui émet une onde électromagnétique dont la fréquence est égale ou supérieure à 20 GHz et égale ou inférieure à 500 THz ; un élément optique (14) qui a une surface de réflexion totale (14a) sur laquelle le mélange de particules et du lubrifiant à tester est disposé de façon à réfléchir totalement l'onde électromagnétique et à causer une exposition du mélange de particules et du lubrifiant à tester (2) à une onde évanescente générée sur la surface de réflexion totale (14a) ; et un détecteur d'ondes électromagnétiques (18) qui détecte l'onde électromagnétique totalement réfléchie par la surface de réflexion totale (14a) ;
ledit procédé comprenant :

une étape de dérivation du spectre qui dérive soit un spectre de la réflectance de l'onde électromagnétique sur la surface de réflexion totale (14a), soit une valeur basée sur le spectre de la réflectance reposant sur un résultat de détection fourni par le détecteur d'ondes électromagnétiques (18), la réflectance ou la valeur basée sur la réflectance dépendant de la fréquence de l'onde électromagnétique et d'une condition de fabrication du mélange de particules et du lubrifiant à tester (2) ; et
une étape d'extraction de caractéristiques qui utilise le spectre dérivé par l'unité de dérivation du spectre pour extraire, dans une plage de fréquences prédéterminée, la réflectance de l'onde électromagnétique sur la surface de réflexion totale (14a) ou une valeur basée sur ladite réflectance qui dépend de la condition de fabrication en tant que résultat de l'extraction,

dans lequel :

la condition de fabrication est un temps de mélange correspondant à la durée de la période pendant laquelle les particules et le lubrifiant sont mélangés les uns aux autres ; l'absorbance de l'onde électromagnétique dans la plage de fréquences prédéterminée est modifiée par les particules par comparaison à l'absorbance de l'onde électromagnétique dans une plage de fréquences autre que la plage de fréquences prédéterminée,

ledit procédé comprenant en outre une étape de détermination de l'étalement qui détermine l'état de l'étalement du lubrifiant sur la base du changement du résultat de l'extraction fourni par l'unité d'extraction de caractéristiques par rapport à un passage du temps de mélange.

13. Programme d'instructions pour la réalisation, par un ordinateur, d'un procédé d'analyse d'un état d'étalement d'un lubrifiant au moyen d'un dispositif d'analyse d'un état d'étalement d'un lubrifiant (1) dans un mélange de particules et du lubrifiant à tester (2) définissant les composants utilisés dans la fabrication d'un comprimé ou du comprimé lui-même, qui comprend un dispositif d'émission d'une onde électromagnétique (12) qui émet une onde électromagnétique dont la fréquence est égale ou supérieure à 20 GHz et égale ou inférieure à 500 THz ; un élément optique (14) qui a une surface de réflexion totale (14a) sur laquelle le mélange de particules et du lubrifiant à tester est disposé de façon à réfléchir totalement l'onde électromagnétique et à causer une exposition du mélange de particules et du lubrifiant à tester (2) à une onde évanescente générée sur la surface de réflexion totale (14a) ; et un détecteur d'ondes électromagnétiques (18) qui détecte l'onde électromagnétique totalement réfléchie par la surface de réflexion totale (14a) ;
ledit procédé comprenant :

une étape de dérivation du spectre qui dérive soit un spectre de la réflectance de l'onde électromagnétique sur la surface de réflexion totale (14a), soit une valeur basée sur le spectre de la réflectance reposant sur un résultat de détection fourni par le détecteur d'ondes électromagnétiques (18), la réflectance ou la valeur basée sur la réflectance dépendant de la fréquence de l'onde électromagnétique et d'une condition de fabrication du mélange de particules et du lubrifiant à tester (2) ; et
une étape d'extraction de caractéristiques qui utilise le spectre dérivé par l'unité de dérivation du spectre pour extraire, dans une plage de fréquences prédéterminée, la réflectance de l'onde électromagnétique sur la surface de réflexion totale (14a) ou une valeur basée sur ladite réflectance qui dépend de la condition de fabrication en tant que résultat de l'extraction,

dans lequel :

la condition de fabrication est un temps de mélange correspondant à la durée de la période pendant laquelle les particules et le lubrifiant sont mélangés les uns aux autres ; et
l'absorbance de l'onde électromagnétique dans la plage de fréquences prédéterminée est modifiée par les particules par comparaison à l'absorbance de l'onde électromagnétique dans une plage de fréquences autre que la plage de fréquences prédéterminée,

ledit procédé comprenant en outre

une étape de détermination de l'étalement qui détermine l'état de l'étalement du lubrifiant sur la base du changement du résultat de l'extraction fourni par l'unité d'extraction de caractéristiques par rapport à un passage du temps de mélange.

Fig. 1

Fig. 2

EP 2 594 920 B1

Fig. 3

Fig. 4

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010008404 A
- JP 2008298460 A
- JP 2008077799 A
- JP 2006003285 A
- WO 2006083001 A

**Non-patent literature cited in the description**

- **CHAN et al.** Spectroscopic Imaging Of Compacted Pharmaceutical Tablets. *CHEMICAL ENGINEERING RESEARCH AND DESIGN,* 2005, vol. 83 (11), 1303-1310